# EUROPEAN PATENT SPECIFICATION

(11) **EP 3 097 147 B1**
(45) Date of publication and mention of the grant of the patent: **30.10.2019**
(21) Application number: 15708589.5
(22) Date of filing: 23.01.2015
(51) Int. Cl.: C08K 5/00, C08L 67/02, C08L 69/00

(54) **PHOTOCHROMIC POLYCARBONATE COMPOSITIONS, METHODS OF MANUFACTURE, AND ARTICLES COMPRISING THE SAME**
FOTOCHROME POLYCARBONATZUSAMMENSETZUNGEN, VERFAHREN ZUR HERSTELLUNG UND ARTIKEL DAMIT
COMPOSITIONS DE POLYCARBONATE PHOTOCHROMIQUES, LEURS PROCÉDÉS DE PRODUCTION, ET ARTICLES LES COMPRENANT

(30) Priority: 24.01.2014 US 201461931033 P
(43) Date of publication of application: 30.11.2016
(73) Proprietor: SABIC Global Technologies B.V., 4612 PX Bergen op Zoom (NL)
(72) Inventor: WEN, Liang, Shanghai 201319 (CN); WANG, Huihui, Shanghai 201319 (CN)
(74) Representative: Modiano, Micaela Nadia
(86) International application number: PCT/IB2015/050525
(87) International publication number: WO 2015/111003

(56) References cited:
- WO-A1-2009/015191
- WO-A1-2011/082054
- US-A1- 2003 032 725

## Description

### BACKGROUND

This disclosure is directed to photochromic polycarbonate compositions, their method of manufacture, and articles thereof.

Photochromic dyes can be widely used in commercial applications in plastics, films, coatings, and inks to provide color-enhancing effects or function as ultraviolet (UV) indicators. Dyes can be incorporated into the bulk of the polycarbonate. Dyes can also be used as a surface coating, for example on a lens in photochromic lens applications. However, use of coating technologies makes the production of photochromic dyes more complex. One-step direct compounding is more desirable, but photochromic dyes are difficult to incorporate into engineering plastics in extrusion processes. This is because that the flexural modulus of the matrix is important for the photochromic performance of the dyes. Softer, lower flexural modulus polymers such as low density polyethylene (LDPE), high density polyethylene (HDPE), and polypropylene (PP) are excellent polymers for photochromic dyes. However, high performance engineering thermoplastic polymers such as polycarbonate, polymethyl methacrylate, polyethylene terephthalate (PET), styrenes, and acrylonitrile-butadiene-styrene (ABS) have higher flexural modulus. These engineering thermoplastics are too stiff to allow the photochromic molecules to twist into their fully activated forms, which results in the ineffectiveness of photochromic dyes. There accordingly remains a need in the art for compositions and methods that allow effective use of photochromic dyes in high performance engineering thermoplastic polymers.
WO2011082054 discloses a polycarbonate comprising units derived from bisphenol cyclohexylidene, and a poly(ether-ester) copolymer comprising 40-60 wt% of polyester hard block units and 40-60 wt% of polyester soft block units. The compositions can be formed, shaped, or molded into articles using thermoplastic processes such as shaping, film and sheet extrusion, injection molding, gas-assist injection molding, extrusion molding, compression molding or blow molding.

### SUMMARY

The present invention relates to a photochromic polycarbonate composition comprising a poly(aliphatic ester-carbonate) comprising bisphenol A carbonate units; a cycloaliphatic polyester comprising units of the formula 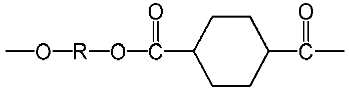 wherein R is a C₂₋₁₂ alkylene or a C₃₋₁₂ cycloalkylene; and a photochromic dye; wherein the composition has a transmission of 80% or more and a haze of 3% or less, measured according to ASTM D1003 (2007) using the color space CIE1931 (Illuminant C and a 2° observer) at a thickness of 1.5 mm. The present invention relates also to an article that comprises the above-described photochromic polycarbonate composition.

The present invention relates also to a method of forming an article comprising shaping, extruding, preferably melt-extruding, blow molding, or injection molding the the above-described photochromic polycarbonate composition.

The above described and other features are exemplified by the following drawings, detailed description, examples, and claims.

### BRIEF DESCRIPTION OF THE DRAWINGS

The following is a brief description of the Figures, which are meant to be exemplary and not limiting, in which:
Figure 1 is a graph of transmission (percent (%)) versus wavelength (nanometer (nm)) illustrating the spectrums of compositions of Comparative Example 1 and Examples 2 and 3 before and after UV radiation;
Figure 2 shows the effect of amount of PCCD on Δa*;
Figure 3 is a graph of transmission (%) versus wavelength (nm) showing the spectrum of the composition of Example 10 before and after exposure to UV radiation; and
Figure 4 is a graph of transmission (%) versus wavelength (nm) showing the spectrum of the composition of Example 12 before and after exposure to UV radiation.

The above described and other features are exemplified by the following Detailed Description and Examples.

### DETAILED DESCRIPTION

The inventors hereof have discovered a method for effective use of photochromic dyes in transparent, high performance engineering thermoplastics. Polycarbonate (PC) is an important engineering thermoplastic with good impact and clarity. But the high stiffness of polycarbonate results in the photochromic dyes being ineffective or inactive when the dyes are used in PC. In order to solve this problem, another engineering thermoplastic, a cycloaliphatic polyester such as poly(1,4-cyclohexanedimethyl-1,4-cyclohexanedicarboxylate) (PCCD) is used in combination with the PC. PCCD is a transparent material with good mechanical property and fluidity. It has been found that the combination of a polycarbonate and PCCD allows the direct incorporation of a photochromic dye in the bulk polymer, for example during extrusion, and provides a material with both effective photochromic activity and a sufficiently high flexural modulus for many, if not most polycarbonate applications.

Accordingly, disclosed herein is a photochromic polycarbonate composition comprising a polycarbonate comprising bisphenol-A carbonate units, a cycloaliphatic polyester, and a photochromic dye.

"Polycarbonate" according to the disclosure means a polymer or copolymer having repeating structural carbonate units of formula (1) 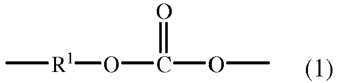 wherein at least 1%, at least 10%, at least 50%, or at least 75% of the total number of R¹ groups are derived from 2,2-bis(4-hydroxyphenyl) propane ("bisphenol A" or "BPA"). The remaining R¹ groups are aromatic, that is, contain at least one C₆₋₃₀ aromatic group. Specifically, each of the remaining R¹ can be derived from a dihydroxy compound such as an aromatic dihydroxy compound of formula (2) or a bisphenol of formula (3). 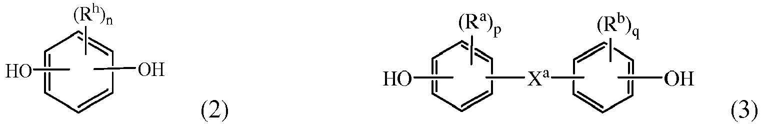 In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl; and p and q are each independently integers of 0 to 4, such that when p or q is less than 4, the valence of each carbon of the ring is filled by hydrogen. In an embodiment, p and q is each 0, or p and q is each 1, and R^{a} and R^{b} are each a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-,-S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Some illustrative examples of specific dihydroxy compounds other than bisphenol A include the following: bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds other than bisphenol A include resorcinol, 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), and from bisphenol A and 1,1-bis(4-hydroxy-3-methylphenyl)-3,3,5-trimethylcyclohexane (isophorone bisphenol).

"Polycarbonate" according to the invention includes copolymers comprising carbonate units and ester units ("poly(ester-carbonate)s", also known as polyester-polycarbonates). Poly(ester-carbonate)s further contain, in addition to recurring carbonate units of formula (1), repeating ester units of formula (4) 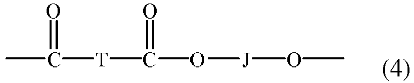 wherein J is a divalent group derived from a dihydroxy compound (which includes a reactive derivative thereof), and can be, for example, a C₂₋₁₀ alkylene, a C₆₋₂₀ cycloalkylene a C₆₋₂₀ arylene, or a polyoxyalkylene group in which the alkylene groups contain 2 to 6 carbon atoms, specifically, 2, 3, or 4 carbon atoms; and T is a divalent group derived from a dicarboxylic acid (which includes a reactive derivative thereof), and can be, for example, a C₂₋₂₀ alkylene, a C₆₋₂₀ cycloalkylene, or a C₆₋₂₀ arylene. Copolyesters containing a combination of different T and/or J groups can be used. The polyester units can be branched or linear.

Specific dihydroxy compounds include aromatic dihydroxy compounds of formula (2) (e.g., resorcinol), bisphenols of formula (3) (e.g., bisphenol A), a C₁₋₈ aliphatic diol such as ethane diol, n-propane diol, 1,4-butane diol, 1,6-cyclohexane diol, 1,6-hydroxymethylcyclohexane, or a combination comprising at least one of the foregoing dihydroxy compounds. Aliphatic dicarboxylic acids that can be used include C₆₋₂₀ aliphatic dicarboxylic acids (which includes the terminal carboxyl groups), specifically linear C₈₋₁₂ aliphatic dicarboxylic acid such as decanedioic acid (sebacic acid); and alpha, omega-C₁₂ dicarboxylic acids such as dodecanedioic acid (DDDA). Aromatic dicarboxylic acids that can be used include terephthalic acid, isophthalic acid, naphthalene dicarboxylic acid, 1,6-cyclohexane dicarboxylic acid, or a combination comprising at least one of the foregoing acids. A combination of isophthalic acid and terephthalic acid wherein the weight ratio of isophthalic acid to terephthalic acid is 91:9 to 2:98 can be used.

Specific ester units include ethylene terephthalate units, n-propylene terephthalate units, n-butylene terephthalate units, ester units derived from isophthalic acid, terephthalic acid, and resorcinol (ITR ester units), and ester units derived from sebacic acid and bisphenol A. The molar ratio of ester units to carbonate units in the poly(ester-carbonate)s can vary broadly, for example 1:99 to 99:1, specifically, 10:90 to 90:10, more specifically, 25:75 to 75:25, or from 2:98 to 15:85.

Specific polycarbonates that can be used include poly(ester-carbonate)s comprising bisphenol A carbonate units and isophthalate-terephthalate-bisphenol A ester units, also commonly referred to as poly(carbonate-ester)s (PCE) poly(phthalate-carbonate)s (PPC) depending on the relative ratio of carbonate units and ester units. Poly(aliphatic ester-carbonate)s can be used, such as those comprising bisphenol A carbonate units and sebacic acid-bisphenol A ester units, such as those commercially available under the trade name LEXAN HFD from the Innovative Plastics division of SABIC. Other specific copolycarbonate includes bisphenol A and bulky bisphenol carbonate units, i.e., derived from bisphenols containing at least 12 carbon atoms, for example 12 to 60 carbon atoms or 20 to 40 carbon atoms. Examples of such copolycarbonates include copolycarbonates comprising bisphenol A carbonate units and 2-phenyl-3,3'-bis(4-hydroxyphenyl) phthalimidine carbonate units (a BPA-PPPBP copolymer), a copolymer comprising bisphenol A carbonate units and 1,1-bis(4-hydroxy-3-methylphenyl)cyclohexane carbonate units (a BPA-DMBPC copolymer), and a copolymer comprising bisphenol A carbonate units and isophorone bisphenol carbonate units (available, for example, under the trade name APEC from Bayer).

Polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁-C₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt. %. Combinations comprising linear polycarbonates and branched polycarbonates can be used.

The polycarbonates can have an intrinsic viscosity, as determined in chloroform at 25°C, of 0.3 to 1.5 deciliters per gram (dl/gm), specifically 0.45 to 1.0 dl/gm. The polycarbonates can have a weight average molecular weight of 10,000 to 200,000 Daltons, specifically 20,000 to 100,000 Daltons, as measured by gel permeation chromatography (GPC), using a crosslinked styrene-divinylbenzene column and calibrated to polycarbonate references. GPC samples are prepared at a concentration of 1 mg per ml, and are eluted at a flow rate of 1.5 ml per minute.

In addition to the polycarbonate as described above, the photochromic polycarbonate compositions according to the invention further comprise a cycloaliphatic polyester of formula (5) 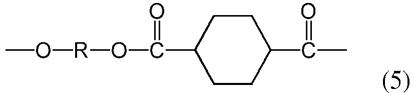 wherein R is a C₂₋₁₂ alkylene or a C₃₋₁₂ cycloalkylene, specifically a C₂₋₆ alkylene or a C₅₋₆ cycloalkylene. In a specific embodiment, the cycloaliphatic polyester is a poly(1,4-cyclohexane-dimethanol-1,4-cyclohexanedicarboxylate) (PCCD) having recurring units of formula (6). 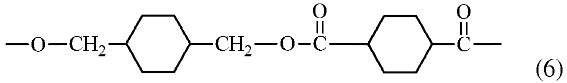 The 1,4-cyclohexanedimethylene group can be derived from 1,4-cyclohexanedimethanol (which includes chemical equivalents thereof), and cyclohexanedicarboxylate (which includes a chemical equivalent thereof. The polyester can comprise the cis-isomer, the trans-isomer, or a combination comprising at least one of the foregoing isomers.

The cycloaliphatic polyester can have an intrinsic viscosity, as determined in chloroform at 25°C, of 0.3 to 1.5 deciliters per gram (dl/gm), specifically 0.45 to 1.0 dl/gm. The polycarbonates can have a weight average molecular weight of 10,000 to 200,000 Daltons, specifically 30,000 to 100,000 Daltons, as measured by gel permeation chromatography (GPC), using a crosslinked styrene-divinylbenzene column.

The polycarbonate and polyester can be used in a weight ratio of 10:1 to 1:10, 10:1 to 1:8, 10:1 to 1:5, 10:1 to 1:1 or 9:1 to 1:1, depending on the function and properties desired. In an embodiment, the composition comprises 5 wt.% to 95 wt.%, 20 wt.% to 95 wt%, 40 wt.% to 95 wt.%, 50 wt.% to 95 wt.%, or 50 wt.% to 90 wt.% of the polycarbonate and 5 wt.% to 95 wt.%, 5 wt.% to 80 wt.%, 5 wt.% to 60 wt.%, 5 wt.% to 50 wt.%, or 10 wt.% to 50 wt.% of the polyester, based on the total weight of the composition.

As stated above, use of a combination of the bisphenol A polycarbonate and PCCD allows the incorporation of a photochromic dye in the bulk polymer composition, where the dye demonstrates excellent photochromic properties. A variety of different photochromic dyes can be used. The photochromic dyes can have at least one activated absorption maxima within the range between about 380 nm and 750 nm, and are thermally and chemically stable. Exemplary photochromic dyes according to the invention include benzopyrans; napthopyrans; spironapthopyrans; spironaphthoxazines; spiro(indolino)naphthoxazines; spiro(benzindolino)naphthoxazines; spiro(indolino)pyridobenzoxazines; spiro(benzindolino)pyridobenzoxazines; spiro(benzindolino)naphthopyrans; spiro(indolino)benzoxazines; spiro(indolino)benzopyrans; spiro(indolino)naphthopyrans; spiro(indolino)quinopyrans; organo-metal dithiazonates, for example (arylazo)thioformic arylhydrazidates; diarylethenes; fulgides and fulgimides, for example 3-furyl, 3-thienyl, and 3-pyrryl fulgides and fulgimides; and spirodihydroindolizines. Combinations comprising at least one photochromic dye can be used. Specific dyes are available under the trade name Reversacol, manufactured by Vivimed Labs Europe Ltd. Useful colors include Oxford Blue, Aqua Green, Sea Green, Berry Red, Flame Red, Rose Red, Plum Red, Palatinate Purple, Storm Purple, Rush Yellow and Corn Yellow.

The organic photochromic dyes can be used either alone or in combination with one or more other photochromic compounds, for example rare earth-doped metal oxide nanoparticles (e.g. zirconium oxide, yttrium oxide, zinc oxide, copper oxide, lanthanum oxide, gadolinium oxide, praseodymium oxide, and the like, and combinations thereof that are doped with rare earths such as lanthanum, cerium, praseodymium, neodymium, samarium, europium, gadolinium, terbium, dysprosium, holmium, erbium, thulium, and the like, and combinations thereof), metal nanoparticles (e.g., gold, silver, platinum, palladium, iridium, rhenium, mercury, ruthenium, osmium, copper, nickel, and the like, and combinations thereof), semiconductor nanoparticles for example, Group II- VI semiconductors (for example, ZnS, ZnSe, ZnTe, CdS, CdSe, CdTe, HgS, HgSe, HgTe, MgTe, and the like), Group III-V semiconductors (for example, GaN, GaP, GaAs, GaSb, InN, InP, InAs, InSb, AlAs, A1P, AlSb, A1S, and the like), Group IV semiconductors (for example, Ge, Si, and the like), Group I-VII semiconductors (for example, CuCl, Agl, and the like), alloys thereof, and mixtures thereof (for example, ternary and quaternary mixtures)), and combinations thereof.

According to the invention the dyes can be used in the photochromic polycarbonate compositions in amounts known in the art, for example 10 to 1,000 parts per million by weight based on the parts by weight of the combination of the polycarbonate and the cycloaliphatic polyester. These weight percent values are per dye, i.e., a composition having multiple dyes could contain each dye independently at these concentration ranges.

An additive composition can be used in the photochromic polycarbonate compositions. The additive composition can comprise one or more additives selected to achieve a desired property, with the proviso that the additive(s) are also selected so as to not significantly adversely affect a desired property of the composition, in particular the photochromic properties. The additive composition or individual additives can be mixed at a suitable time during the mixing of the components for forming the composition. The additive can be soluble and/or non-soluble in polycarbonate.

According to the invention, the additive composition can include an impact modifier, flow modifier, antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of an antioxidant, heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, 0.01 to 0.2 wt%, each based on the total weight of the polymer in the composition.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g, dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS™ 168. Heat stabilizers are generally used in amounts of 0.01 to 5 wt%, based on the total weight of polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of polymer in the composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

There is considerable overlap among plasticizers, lubricants, and mold release agents, which include, for example, glycerol tristearate (GTS), phthalic acid esters (e.g, octyl-4,5-epoxy-hexahydrophthalate), tris-(octoxycarbonylethyl)isocyanurate, tristearin, di- or polyfunctional aromatic phosphates (e.g, resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g, alkyl stearyl esters, such as, methyl stearate, stearyl stearate, and the like), waxes (e.g, beeswax, montan wax, paraffin wax, or the like), or combinations comprising at least one of the foregoing plasticizers, lubricants, and mold release agents. These are generally used in amounts of 0.01 to 5 wt%, based on the total weight of the polymer in the composition.

In certain embodiments, the photochromic polycarbonate compositions further comprise phosphoric acid. Without wishing to be bound by theory, it is believed that the polycarbonate may react with the cycloaliphatic polyester through transesterification causing the degradation of the polymers and the presence of phosphoric acid can effectively prevent this transesterification thus stabilizing the photochromic polycarbonate compositions. The amount of phosphoric acid added to the photochromic polycarbonate compositions can be, for example, 0.001 to 0.5 wt%, specifically 0.01 to 0.1 wt% based on the total weight of the composition.

Methods for forming the photochromic polycarbonate compositions can vary, but in an advantageous feature, include the photochromic dye in the bulk polymer composition. In an embodiment, the polymers are combined (e.g., blended) with any additives (e.g., a mold release agent) such as in a screw-type extruder. The polymers, dye, and any additives can be combined in any order, and in form, for example, powder, granular, filamentous, as a masterbatch, and the like. Transparent compositions can be produced by manipulation of the process used to manufacture the photochromic polycarbonate composition. One example of such a process to produce transparent photochromic polycarbonate compositions is described in U.S. Patent No. 7,767,738. The photochromic polycarbonate compositions can be foamed, extruded into a sheet, or optionally pelletized. Methods of foaming a photochromic polycarbonate composition using frothing or physical or chemical blowing agents are known and can be used. The pellets can be used for molding into articles, foaming, or they can be used in forming a sheet of the flame retardant photochromic polycarbonate composition. In some embodiments, the composition can be extruded (or co-extruded with a coating or other layer) in the form of a sheet and/or can be processed through calendaring rolls to form the desired sheet.

The photochromic polycarbonate compositions can further have good melt viscosities, which aid processing. The photochromic polycarbonate compositions can have a melt volume flow rate (MVR, cubic centimeter per 10 minutes (cc/10 min)), of 4 to 30, greater than or equal to 12, greater than or equal to 10, greater than or equal to 15, greater than or equal to 16, greater than or equal to 17, greater than or equal to 18, greater than or equal to 19, or greater than or equal to 20 cc/min, measured at 300°C/ 1.2 Kg at 360 second dwell according to ISO 1133. The same or similar values can be obtained in articles having a wide range of thicknesses, for example from 0.1 to 10 mm, or 0.5 to 5 mm.

The photochromic polycarbonate compositions can further have excellent impact properties, in particular multiaxial impact (MAI) and ductility, which provides information on how the compositions behave under multiaxial deformation conditions. The deformation applied can be a high-speed puncture. Properties reported include total energy absorbed, which is expressed in Joules (J) and ductility of parts in percent (% D) based on whether the part fractured in a brittle or ductile manner. A ductile part shows yielding where it is penetrated by the tip, a brittle part splits into pieces or has a section punched out that shows no yielding. The photochromic polycarbonate compositions can have an MAI equal to or higher than 100 J, determined at 23°C at an impact speed of 4.4 m/second in accordance with ISO 6603 on discs with a thickness of 3.2 mm. The compositions can have a ductility in multiaxial impact of 80% and higher, determined at 23°C at an impact speed of 4.4 m/second in accordance with ISO 6603 on discs with a thickness of 3.2 mm. The same or similar values can be obtained in articles having a wide range of thicknesses, for example from 0.1 to 10 mm, but particularly at 0.5 to 5 mm.

The photochromic polycarbonate compositions can further have excellent impact strength. For example, an article molded from the photochromic polycarbonate compositions can have a notched Izod impact of greater than 10 kJ/m² as measured according to ISO 180/1A at 23°C, 5.5 J, on impact bars with a 4 mm thickness. The same or similar values can be obtained in articles having a wide range of thicknesses, for example from 0.1 to 10 mm, but particularly at 0.5 to 5 mm.

The photochromic polycarbonate compositions can further be formulated to have a haze less than 3%, or less than 2%, and a transmission greater than 80%, each measured using the color space CIE1931 (Illuminant C and a 2° observer) or according to ASTM D 1003 (2007) using illuminant C at a 0.062 inch (1.5 mm) thickness. In some embodiments, the photochromic polycarbonate compositions can be formulated such that an article molded from the composition has both a haze less of than 3% and a transmission of greater than 80%, each measured using the color space CIE1931 (Illuminant C and a 2° observer) or according to ASTM D 1003 (2007) using illuminant C at a 0.062 inch (1.5 mm) thickness. In some embodiments the articles can have all three of a haze less of than 3%, a transmission of greater than 85%, and an MAI equal to or higher than 100 J, determined at 23°C at an impact speed of 4.4 m/second in accordance with ISO 6603 on discs with a thickness of 1.5 mm.

The photochromic polycarbonate compositions can further have a flexural modulus of less than 3,000 MPa, less than 2,500 MPa, or less than 2,200 MPa measured according to ASTM D790 (2010) with the speed of 1.27 mm/min.

The photochromic polycarbonate compositions can further have a delta a* value of 0.1 to 10 measured on Color Eye 7000A according to ASTM 6290-98.

Shaped, formed, or molded articles comprising the photochromic polycarbonate compositions are also provided. The photochromic polycarbonate compositions can be molded into useful shaped articles by a variety of means such as injection molding, extrusion, rotational molding, blow molding, and thermoforming to form articles. Thus the photochromic polycarbonate compositions can be used to form a foamed article, a molded article, a thermoformed article, an extruded film, an extruded sheet, a layer of a multi-layer article, e.g., a cap-layer, a substrate for a coated article, or a substrate for a metallized article. These values can be obtained in articles having a wide range of thicknesses, for example from 0.1 to 10 mm, or 0.5 to 5 mm. The articles are useful in a variety of applications. For example, an optical lens, a toy, a component of a toy, a novelty item, a packaging material, or a security marker.

Set forth below are some embodiments of the photochromic polycarbonate compositions, methods of manufacture and articles comprising the same.

According to an aspect of the instant disclosure, a photochromic polycarbonate composition comprises: a polycarbonate comprising bisphenol A carbonate units; a cycloaliphatic polyester comprising units of the formula (5); and a photochromic dye; wherein the composition has a transmission of 80% or more and a haze of 3% or less, measured according to ASTM D1003 (2007) using the color space CIE1931 (Illuminant C and a 2° observer) at a thickness of 1.5 mm.

According to the invention, the polycarbonate in the photochromic composition as above comprises a poly(aliphatic ester-carbonate) comprising bisphenol carbonate units.

Optionally the poly(aliphatic ester-carbonate) comprises: bisphenol-A polycarbonate units and units of the formula:.

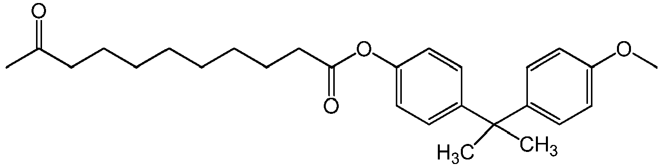

According to the invention, the cycloaliphatic polyester in the photochromic composition can comprise units of the formula (6).

According to the invention, the photochromic dye in the photochromic composition is a benzopyran, naphthopyran, spironaphthopyran, spironaphthoxazine, spiro(indolino)naphthoxazine, spiro(benzindolino)naphthoxazine, spiro(indolino)pyridobenzoxazine, spiro(benzindolino)pyridobenzoxazine, spiro(benzindolino)naphthopyran, spiro(indolino)benzoxazine, spiro(indolino)benzopyran, spiro(indolino)naphthopyran, spiro(indolino)quinopyrans, (arylazo)thioformic arylhydrazidate; diarylethene; fulgide, fulgimide, spirodihydroindolizine, or a combination comprising at least one of the foregoing, preferably the photochromic dye is a naphth[2,1-b][1,4]oxazine, a naphth[1,2-b][1,4]oxazine, a 3H-naphtho[2,1-b]pyran, a 2H-naphtho[1,2-b]pyran, or a combination comprising at least one of the foregoing.

According to the invention, one or more of the following conditions can apply: (1) the weight ratio of the polycarbonate relative to the cycloaliphatic polyester is 10:1 to 1:10; (2) the polycarbonate is present in an amount of 5 wt.% to 95 wt.%, and the cycloaliphatic polyester is present in an amount of 5 wt.% to 95 wt.%, each based on the total weight of the composition; (3) the polycarbonate is present in an amount of 50 wt.% to 95 wt.%, and the cycloaliphatic polyester is present in an amount of 5 wt.% to 50 wt.%, each based on the total weight of the composition; or (4) the photochromic dye is present in an amount of 10 ppm to 1,000 ppm by weight, based on the total parts by weight of the polycarbonate and the aliphatic polyester.

According to the invention, the composition can comprise one or more of the following additional components: (1) the composition further comprises 0.001 to 0.5 wt% of phosphoric acid, based on the total weight of the composition; (2) the composition further comprises 0.01 to 0.1 wt.% of phosphoric acid, based on the total weight of the composition; or (3) the composition further comprises an additive selected form an antioxidant, a heat stabilizer, a mold release agent, an ultraviolet light stabilizer, or a combination comprising at least one of the foregoing, optionally the additive comprises tris(2,4-di-t-butylphenyl)phosphite.

The composition can have one or more of the following properties: (1) the composition has a flexural modulus of less than 3000 MPa measured according to ASTM D790 (2010) with the speed of 1.27 mm/min; or (2) the composition has a delta a* value of 0.1 to 10 measured on Color Eye 7000A according to ASTM 6290-98.

A specific exemplary composition comprises, based on the total weight of the composition, 50 wt.% to 95 wt.% of a poly(aliphatic ester-carbonate)comprising: bisphenol-A polycarbonate units; and units of the formula: 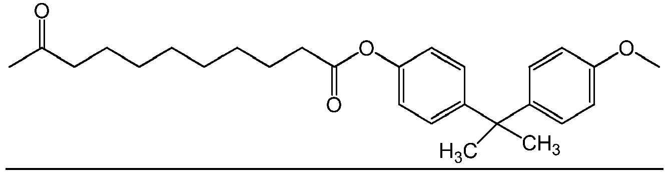 5 wt.% to 50 wt.% of an aliphatic polyester comprising units of the formula (6); a photochromic dye; and 0.01 wt.% to 0.2 wt.% of an additive selected from an antioxidant, a heat stabilizer, a mold release agent, an ultraviolet light stabilizer, or a combination comprising at least one of the foregoing; wherein the composition has a transmission of 80% or more and a haze of 3% or less, measured according to ASTM D1003 (2007) using the color space CIE1931 (Illuminant C and a 2° observer) at a thickness of 1.5 mm.

One or more of the following conditions can apply to the specific exemplary composition: (1) the compositions have a delta a* value of 0.1 to 10 measured on Color Eye 7000A according to ASTM 6290-98; (2) the compositions further comprises 0.01 to 0.1 wt.% of phosphoric acid, based on the total weight of the compositions; (3) the photochromic dye is a naphth[2,1-b][1,4]oxazine, a naphth[1,2-b][1,4]oxazine, a 3H-naphtho[2,1-b]pyran, a 2H-naphtho[1,2-b]pyran, or a combination comprising at least one of the foregoing; or (4) the additive comprises tris(2,4-di-t-butylphenyl)phosphite; (5) the weight ratio of the polycarbonate relative to the cycloaliphatic polyester is 10:1 to 1:10; or (6) the photochromic dye is present in an amount of 10 ppm to 1,000 ppm by weight, based on the total parts by weight of the polycarbonate and the aliphatic polyester.

Another exemplary composition comprises, based on the total weight of the composition, 50 wt.% to 95 wt.% of a poly(aliphatic ester-carbonate) comprising: bisphenol-A polycarbonate units; and units of the formula 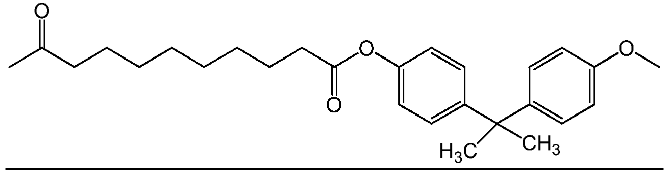 5 wt.% to 50 wt.% of an aliphatic polyester comprising units of the formula (6); a photochromic dye selected from naphth[2,1-b][1,4]oxazine, a naphth[1,2-b][1,4]oxazine, a 3H-naphtho[2,1-b]pyran, a 2H-naphtho[1,2-b]pyran, or a combination comprising at least one of the foregoing, wherein the photochromic dye is present in an amount of 10 ppm to 1,000 ppm by weight, based on the total parts by weight of the poly(aliphatic ester-carbonate) and the aliphatic polyester; 0.01 to 0.1 wt.% of phosphoric acid; and 0.01 wt.% to 0.2 wt.% tris(2,4-di-t-butylphenyl)phosphite; wherein the composition has a transmission of 80% or more and a haze of 3% or less, measured according to ASTM D1003 (2007) using the color space CIE1931 (Illuminant C and a 2° observer) at a thickness of 1.5 mm; and the composition has a delta a* value of 0.1 to 10 measured on Color Eye 7000A according to ASTM 6290-98.

In another embodiment, an article comprises the composition of any of the foregoing embodiments. The article is in the form of a film or sheet and may include an optical lens, a toy, a component of a toy, a novelty item, a packaging material or a security marker.

A method of forming the composition, according to the invention, comprises melt-extruding the components of any of the foregoing embodiments or shaping, extruding, blow molding, or injection molding the composition of any of the foregoing embodiments.

The photochromic polycarbonate compositions are further illustrated by the following non-limiting examples, which use the following components.

### EXAMPLES

The materials used in the Examples are described in Table 1. Amounts of components are in wt%, based on the total weight of the composition, unless otherwise indicated.

**Table 1**

| Component | Trade name; chemical description | Source |
|---|---|---|
| PCCD | Poly(1,4-cyclohexane dimethanol dimethyl 1,4-cyclohexane dicarboxylate), 2000 poise viscosity | Eastman Chemical |
| PETS | Pentaerythritol tetrastearate | Faci |
| Stabilizer | Tris(2,4-di-tert-butylphenyl)phosphite | Ciba |
| PC-1 | BPA polycarbonate having a weight average Mw of about 21,900 Dalton as determined by GPC using polycarbonate standards | Fisher Scientific |
| PA | 10% Phosphoric acid diluted in water | Vivimed Labs Europe Ltd |
| Photochromic dye green | Reversacol aqua green | Vivimed Labs Europe Ltd |
| Photochromic dye red 1 | Reversacol plum red | Vivimed Labs Europe Ltd |
| Photochromic dye red 2 | Reversacol berry red | Vivimed Labs Europe Ltd |
| PC-2 | Sebacic acid-BPA poly(aliphatic ester-carbonate) with p-cumyl phenol end groups, Mw of about 36,000 g/mol as determined by GPC using polycarbonate standards | SABIC |
| PC-3 | Sebacic acid-BPA poly(aliphatic ester-carbonate) with p-cumyl phenol end groups, Mw of about 21,000 g/mol as determined by GPC using polycarbonate standards | SABIC |

| | | |
|---|---|---|
| **Note**: All compositions comprising PC-1 as sole PC-component are shown here as reference examples only; exclusively compositions comprising PC-2 and/or PC-3 are encompassed instead by the instant invention as claimed. | | |

The polycarbonate compositions were pre-blended and then extruded on a TEM-37BS twin screw extruder. The extruder has 10 zones, which were set at temperatures of 50°C (zone 1), 100 °C (zone 2), 120°C (zone 3), 200 °C (zone 4), 230 °C (zone 5 to 10). Screw speed was 300 rpm and throughput was 40 kg/hr.

Extruded pellets were dried in a dehumidifying dryer for 4 hours at 80°C. Color chip and flex bars were molded on FANUC machine. Molding conditions are shown in Table 2. It will be recognized by one skilled in the art that the method is not limited to these temperatures or processing equipment.

**Table 2**

| Cnd: Pre-drying time | Hour | 4 | 4 |
|---|---|---|---|
| Cnd: Pre-drying temp | °C | 80 | 80 |
| Zone 1 temp | °C | 220 | 220 |
| Zone 2 temp | °C | 230 | 230 |
| Zone 3 temp | °C | 230 | 230 |
| Nozzle temp | °C | 230 | 230 |
| Mold temp | °C | 75 | 75 |
| Screw speed | rpm | 100 | 100 |
| Back pressure | kgf/cm² | 68 | 68 |
| Decompression | mm | 3 | 3 |
| Injection time | s | 0.8 | 0.82 |
| Holding time | s | 8 | 8 |
| Cooling time | s | 15 | 15 |
| Approx. cycle time | s | 30 | 30 |
| Molding Machine | NONE | FANUC | FANUC |
| Mold Type (insert) | NONE | Color chip | ASTM FLEX |
| Shot volume | mm | 48 | 35 |
| Switch point(mm) | mm | 10 | 10 |
| Injection speed(mm/s) | mm/s | 50 | 50 |
| Holding pressure | kgf/cm² | 700 | 700 |
| Max. Injection pressure | kgf/cm² | 1000 | 1000 |
| Transfer pressure | kgf/cm² | 0 | 0 |
| Cycle time | s | 30 | 30 |
| Cushion | mm | 2.57 | 4.53 |

Molecular weight of polymers (Mn, Mw, and polydispersity (N)) was determined by gel permeation chromatography (GPC).

Melt volume rate (MVR) and melt flow rate (MFR) were determined at 300 °C under load of 1.2 kg according to ASTM D1238-04.

Flexural modulus was tested according to ASTM D790 (2010) with the speed of 1.27 mm/min.

Transmission and Haze were tested according to ASTM D1003 (2007) using the color space CIE1931 (Illuminant C and a 2° observer) on HazeGard II.

L*, a*, and b* were tested on Color Eye 7000A based on ASTM 6290-98.

### Examples 1-3.

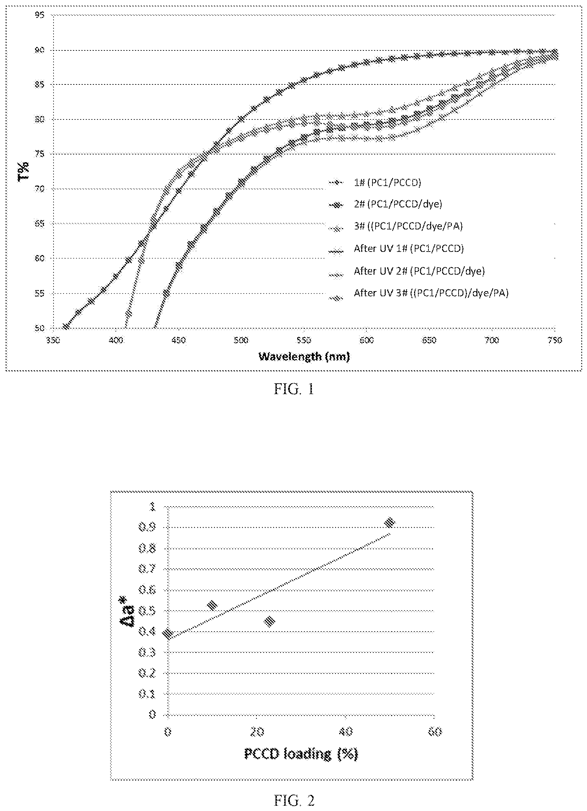

Examples 1-3 (indicated for reference) demonstrate the performance of photochromic dyes in compositions containing a polycarbonate and PCCD. Formulations and results are shown in Table 3 and Fig. 1.

**Table 3**

| Component | | | Unit | CEx1 | Ex2 | Ex3 |
|---|---|---|---|---|---|---|
| PCCD | | | % | 50 | 50 | 50 |
| PETS | | | % | 0.35 | 0.35 | 0.35 |
| Stabilizer | | | % | 0.06 | 0.06 | 0.06 |
| PC-1 | | | % | 49.59 | 49.565 | 49.515 |
| PA | | | % | | | 0.05 |
| Photochromic dye green | | | % | | 0.025 | 0.025 |

| Properties | | | | | | |
|---|---|---|---|---|---|---|
| MFR (300°C, 1.2 kg) | | | g/10 min | 66.9 | 56.5 | 44.4 |
| Flexural Modulus | | | MPa | 1510 | 1480 | 1500 |
| Transmission (2 mm) | | | % | 88.3 | 82.8 | 85.2 |
| Haze (2 mm) | | | % | 1.3 | 0.9 | 0.9 |
| Molecular weight | Mw | PC | Dalton | 40465 | 40355 | 41582 |
| | | PCCD | Dalton | 67560 | 67041 | 70649 |
| | Mn | PC | Dalton | 17296 | 17288 | 17833 |
| | | PCCD | Dalton | 35984 | 36650 | 37974 |
| | N | PC | | 2.34 | 2.33 | 2.33 |
| | | PCCD | | 1.88 | 1.83 | 1.86 |

Comparative Example 1 (CEx1) and Examples 2 and 3 (Ex2 and Ex3) indicate that when polycarbonate PC-1 is used in combination with PCCD, the flexural modulus of the composition decreases to about 1500 MPa.

The results also show that a photochromic dye functions properly in a composition containing both PC-1 and PCCD. As shown in Fig. 1, the transmission value of the composition of CE1, which does not contain any photochromic dye, remains the same before and after UV radiation, whereas the transmission values of the composition of Ex2 and Ex3, which contain 0.025% Reversacol aqua green respectively, decrease after UV radiation in a wavelength region between 500 nm and 700 nm, indicating that yellow, orange and red color lights are absorbed after UV radiation. The results are consistent with visual observation of the samples before and after the UV radiation. For example, a sample of Ex3 shows a little orange color before UV radiation. Then the sample turns green after UV radiation indicating that the photochromic dye functions properly in the composition containing both PC-1 and PCCD.

The presence of phosphoric acid provides further advantage. Ex3 contains 0.05% of phosphoric acid. The molecular weights of PC-1 and PCCD of Ex3 are higher than the molecular weights of PC-1 and PCCD of CEx1 and Ex2, which do not contain any phosphoric acid, demonstrating that the presence of phosphoric acid reduces/prevents the degradation of PC-1 and PCCD. The transmission of Ex3 is 85.2%. In contrast, the PC-1 and PCCD in Ex2, which does not contain phosphoric acid, are degraded and the transmission is 82.8%, which is lower than that of Ex3 (85.2%). Without wishing to be bound by theory, it is believed that the degradation of PC-1 and PCCD are caused by the transesterification of PC-1 and PCCD and the presence of phosphoric acid can effectively prevent this transesterification.

### Examples 4-8

Examples 4-8 (indicated for reference) illustrate the effects of PCCD loading on the performance of photochromic dye. Formulations and results are shown in Table 4 and Fig. 2.

**Table 4**

| Component | | | Unit | CEx4 | CEx5 | Ex6 | Ex7 | Ex8 |
|---|---|---|---|---|---|---|---|---|
| PCCD | | | % | | | 10 | 23 | 50 |
| PETS | | | % | 0.35 | 0.35 | 0.35 | 0.35 | 0.35 |
| Stabilizer | | | % | 0.06 | 0.06 | 0.06 | 0.06 | 0.06 |
| PC-1 | | | % | 99.59 | 99.565 | 89.515 | 76.515 | 49.515 |
| PA | | | % | | | 0.05 | 0.05 | 0.05 |
| Photochromic dye green | | | % | | 0.025 | 0.025 | 0.025 | 0.025 |

| Properties | | | | | | | | |
|---|---|---|---|---|---|---|---|---|
| Flexural Modulus | | | MPa | 2280 | 2280 | 2170 | 1968.5 | 1500 |
| MFR (300°C, 1.2 kg) | | | g/10 min | 29.8 | 31.90 | 33.10 | 43.10 | 44.40 |
| Color | Before UV radiation | L* | | 95.17 | 90.90 | 87.52 | 91.20 | 91.99 |
| | | a* | | -0.15 | -4.62 | 0.61 | -1.66 | -2.77 |
| | | b* | | 1.49 | 3.47 | 2.53 | 6.53 | 6.26 |
| | After UV radiation | L* | | 95.15 | 90.59 | 87.14 | 90.83 | 91.36 |
| | | a* | | -0.15 | -5.01 | 0.082 | -2.11 | -3.7 |
| | | b* | | 1.50 | 3.12 | 2.28 | 6.28 | 5.73 |
| | ΔE before and after UV radiation | | | 0.025 | 0.60 | 0.69 | 0.63 | 1.23 |
| | Δa* before and after UV radiation | | | 0 | 0.39 | 0.5254 | 0.45 | 0.93 |

Amounts of 0%, 10%, 23%, and 50% of PCCD are blended with PC-1 and photochromic dye. As shown in Table 4 and Fig. 2, photochromic phenomenon can still be observed when the PCCD loading decreases to 20%. For example, the color chips of Ex 6 and Ex 7 turn green after UV radiation, though the color change is not obvious, and the color quickly changed back after UV radiation is stopped. But when the PCCD is not used (CEx5), the color change was very difficult to be observed by eyes. The chip of CEx 5 is green both before and after UV radiation.

Because the photochromic dye-Reversacol aqua green turns green after UV radiation, the Δa* is used to indicate the color change of polycarbonate material in Fig 2. In general, the lower the a* value is, the greener the color is. Fig. 2 indicates that Δa* increases with PCCD loading. Without wishing to be bound by theory, it is believed that this results from the increase of free space caused by blending PCCD with PC-1. The higher the PCCD loading is, the more free space the composition has, and the easier it is for photochromic dyes to change color.

### Examples 9-10

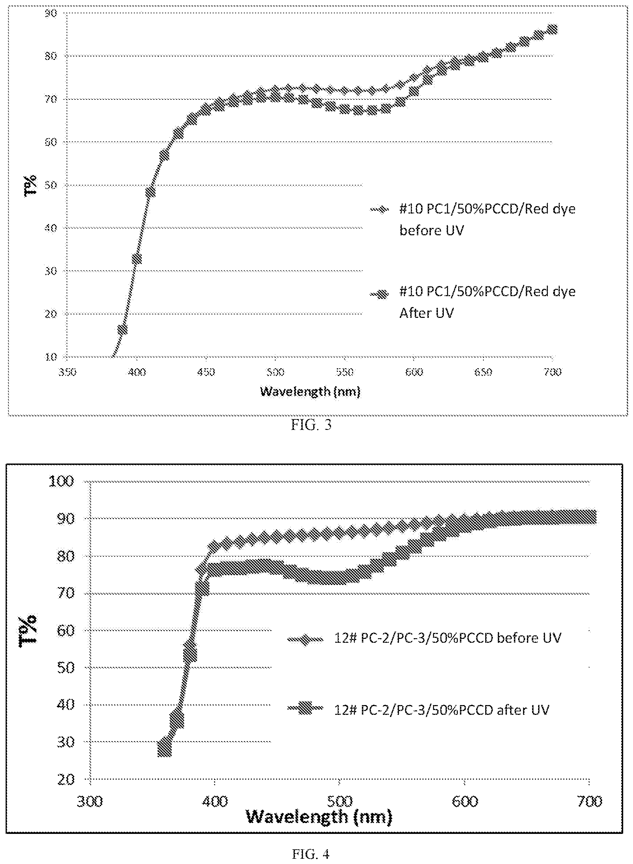

Examples 9 and 10 (indicated for reference) demonstrate the performance of Reversacol plum red in compositions containing PCCD and PC-1. Formulations and results are shown in Table 5 and Fig. 3.

**Table 5**

| Component | | | Unit | Ex9 | Ex10 |
|---|---|---|---|---|---|
| PCCD | | | % | 50 | 50 |
| PETS | | | % | 0.35 | 0.35 |
| Stabilizer | | | % | 0.06 | 0.06 |
| PC-1 | | | % | 49.535 | 49.515 |
| PA | | | % | 0.05 | 0.05 |
| Photochromic dye Red-1 | | | % | 0.005 | 0.025 |

| Properties | | | | | |
|---|---|---|---|---|---|
| MFR (300°C, 1.2 kg) | | | g/10 min | 43.7 | 43.8 |
| Flexural Modulus | | | MPa | 1140 | 1130 |
| Transmission (1.5 mm) | | | % | 89.2 | 81 |
| Haze (1.5 mm) | | | % | 0.8 | 0.8 |
| Color | Before UV radiation | L* | | 94.19 | 88.5 |
| | | a* | | -0.442 | 0.466 |
| | | b* | | 3.342 | 5.035 |
| | After UV radiation | L* | | 93.78 | 86.89 |
| | | a* | | -0.026 | 1.97 |
| | | b* | | 2.971 | 3.087 |
| | ΔE before and after UV radiation | | | 0.697 | 2.941 |
| | Δa* before and after UV radiation | | | 0.416 | 1.504 |

Another kind of photochromic dye, Reversacol plum red, is formulated with PCCD and PC-1. After UV radiation, the color chip of Ex 10 turns red, which is consistent with the spectrum change as illustrated in Fig. 3, which shows a decrease of transmission of green and yellow lights.

The increase of a* also provides an indication of the color change. As shown in Table 5, the dye loading of Ex 9 (0.005%) is lower than that of Ex 10 (0.025%) and Δa* of Ex 9 is lower than that of Ex10, indicating that the color change becomes obvious with the increase of dye loading.

### Examples 11-14

Examples 11-14 illustrate the performance of a photochromic dye in a composition containing PCCD and a bisphenol-A/sebacic acid copolymer ("HFD"). Example 11 is indicated for reference, whereas examples 12-14 are encompassed by the instant invention. Formulations and results are shown in Table 6 and Fig. 4.

**Table 6**

| Component | | | Unit | Ex11 | Ex12 | Exl3 | Exl4 |
|---|---|---|---|---|---|---|---|
| PCCD | | | % | 50 | 50 | 15 | 50 |
| PETS | | | % | 0.35 | 0.35 | 0.35 | 0.35 |
| Stabilizer | | | % | 0.06 | 0.06 | 0.06 | 0.06 |
| PC-1 | | | % | 49.54 | | | |
| PA | | | % | 0.05 | 0.05 | 0.05 | 0.05 |
| PC-2 | | | | | 24.7575 | 44.7575 | 24.765 |
| PC-3 | | | | | 24.7575 | 39.7575 | 24.765 |
| Photochromic dye red-2 | | | % | | 0.025 | 0.025 | 0.01 |

| Properties | | | | | | | |
|---|---|---|---|---|---|---|---|
| MFR (300°C, 1.2 kg) | | | g/10 min | 44.3 | 36.7 | 29.5 | 35.8 |
| Flexural Modulus | | | MPa | x | 1110 | 1350 | 1100 |
| Transmission (1.5 mm) | | | % | 91.4 | 90.7 | 89.1 | 91.4 |
| Haze (1.5 mm) | | | % | 1.5 | 0.8 | 0.5 | 0.8 |
| Color | Before UV radiation | L* | | 95.65 | 95.23 | 94.17 | 95.65 |
| | | a* | | -0.135 | 0.685 | 1.71 | 0.166 |
| | | b* | | 1.39 | 2.187 | 2.792 | 1.679 |
| | After UV radiation | L* | | 95.65 | 92.1 | 91.55 | 94.22 |
| | | a* | | -0.134 | 5.759 | 5.963 | 2.507 |
| | | b* | | 1.38 | 4.829 | 4.877 | 2.862 |
| | ΔE before and after UV radiation | | | 0.009 | 6.517 | 5.413 | 2.989 |
| | Δa* before and after UV radiation | | | 0.001 | 5.074 | 4.253 | 2.341 |

Part of a color chip made from the composition of Ex12 is covered and the uncovered part is exposed to UV radiation. The area exposed to UV radiation becomes red compared to the area that is not covered thus not exposed to UV radiation. The result is consistent with the spectrum change illustrated in Fig. 4. As shown in Fig. 4, the transmission of violet, blue, cyan, green and yellow lights decrease after UV radiation indicating a red color after UV radiation.

The increase of a* also provides a solid evidence of this photochromic phenomenon. In general, the bigger the a* vale is, the redder the color of the chip is. The a* of Examples 13, 13 and 14 color chips increase obviously after UV radiation. Accordingly, a photochromic material is provided by combining PCCD, a polycarbonate copolymer and a photochromic dye.

The singular forms "a," "an," and "the" include plural referents unless the context clearly dictates otherwise. "Or" means "and/or." The endpoints of all ranges directed to the same component or property are inclusive and independently combinable. Unless defined otherwise, technical and scientific terms used herein have the same meaning as is commonly understood by one of skill in the art to which this invention belongs.

As used herein, a "combination" is inclusive of blends, mixtures, alloys, reaction products, and the like. Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" and "hydrocarbon" refer broadly to a substituent comprising carbon and hydrogen, optionally with 1 to 3 heteroatoms, for example, oxygen, nitrogen, halogen, silicon, sulfur, or a combination thereof; "alkyl" refers to a straight or branched chain, saturated monovalent hydrocarbon group; "alkylene" refers to a straight or branched chain, saturated, divalent hydrocarbon group; "alkylidene" refers to a straight or branched chain, saturated divalent hydrocarbon group, with both valences on a single common carbon atom; "cycloalkyl" refers to a nonaromatic monovalent monocyclic or multicylic hydrocarbon group having at least three carbon atoms, "aryl" refers to an aromatic monovalent group containing only carbon in the aromatic ring or rings; "arylene" refers to an aromatic divalent group containing only carbon in the aromatic ring or rings; "arylalkyl" refers to an alkyl group that has been substituted with an aryl group as defined above, with benzyl being an exemplary arylalkyl group; "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound. Exemplary groups that can be present on a "substituted" position include, but are not limited to, cyano; hydroxyl; nitro; azido; alkanoyl (such as a C₂₋₆ alkanoyl group such as acyl); carboxamido; C₁₋₆ or C₁₋₃ alkyl, cycloalkyl, alkenyl, and alkynyl (including groups having at least one unsaturated linkages and from 2 to 8, or 2 to 6 carbon atoms); C₁₋₆ or C₁₋₃ alkoxy groups; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic rings (e.g., phenyl, biphenyl, naphthyl, or the like, each ring either substituted or unsubstituted aromatic); C₇₋₁₉ alkylenearyl having 1 to 3 separate or fused rings and from 6 to 18 ring carbon atoms, with benzyl being an exemplary arylalkyl group; or arylalkoxy having 1 to 3 separate or fused rings and from 6 to 18 ring carbon atoms, with benzyloxy being an exemplary arylalkoxy group.

## Claims

1. A photochromic polycarbonate composition comprising:
a poly(aliphatic ester-carbonate) comprising bisphenol A carbonate units;
a cycloaliphatic polyester comprising units of the formula 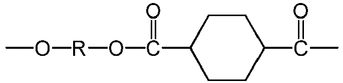 wherein R is a C₂₋₁₂ alkylene or a C₃₋₁₂ cycloalkylene; and
a photochromic dye;
wherein the composition has a transmission of 80% or more and a haze of 3% or less, measured according to ASTM D1003 (2007) using the color space CIE1931 (Illuminant C and a 2° observer) at a thickness of 1.5 mm.

2. The composition of claim 1, wherein the composition has at least one of the following properties: a flexural modulus of less than 3000 MPa measured according to ASTM D790 (2010) with the speed of 1.27 mm/min; or the composition has a delta a* value of 0.1 to 10 measured on Color Eye 7000A according to ASTM 6290-98.

3. The composition of claim 1 or claim 2, wherein the poly(aliphatic ester-carbonate) comprises:
bisphenol-A polycarbonate units; and
units of the formula

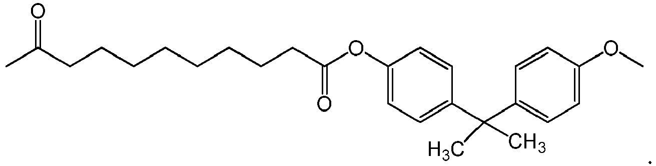

4. The composition of any one of claims 1 to 3, wherein the cycloaliphatic polyester comprises units of the formula

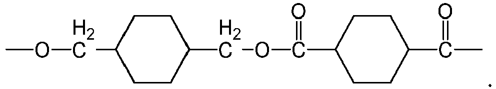

5. The composition of any one of claims 1 to 4, wherein the weight ratio of the polycarbonate relative to the cycloaliphatic polyester is 10:1 to 1:10, optionally the polycarbonate is present in an amount of 5 wt.% to 95 wt.%, and the cycloaliphatic polyester is present in an amount of 5 wt.% to 95 wt.%, each based on the total weight of the composition; or optionally the polycarbonate is present in an amount of 50 wt.% to 95 wt.%, and the cycloaliphatic polyester is present in an amount of 5 wt.% to 50 wt.%, each based on the total weight of the composition.

6. The composition of any one of claims 1 to 5, , wherein the photochromic dye is a benzopyran, naphthopyran, spironaphthopyran, spironaphthoxazine, spiro(indolino)naphthoxazine, spiro(benzindolino)naphthoxazine, spiro(indolino)pyridobenzoxazine, spiro(benzindolino)pyridobenzoxazine, spiro(benzindolino)naphthopyran, spiro(indolino)benzoxazine, spiro(indolino)benzopyran, spiro(indolino)naphthopyran, spiro(indolino)quinopyrans, (arylazo)thioformic arylhydrazidate; diarylethene; fulgide, fulgimide, spirodihydroindolizine, or a combination comprising at least one of the foregoing, preferably the photochromic dye is a naphth[2,1-b] [1,4]oxazine, a naphth[1,2-b][1,4]oxazine, a 3H-naphtho[2,1-b]pyran, a 2H-naphtho[1,2-b]pyran, or a combination comprising at least one of the foregoing.

7. The composition of any one of claims 1 to 6, wherein the photochromic dye is present in an amount of 10 ppm to 1,000 ppm by weight, based on the total parts by weight of the polycarbonate and the aliphatic polyester.

8. The composition of any one of claims 1 to 7, further comprising 0.001 to 0.5 wt% or 0.01 to 0.1 wt.% of phosphoric acid, based on the total weight of the composition.

9. The composition of any one of claims 1 to 8, further comprising an additive selected form an antioxidant, a heat stabilizer, a mold release agent, an ultraviolet light stabilizer, or a combination comprising at least one of the foregoing, optionally the additive comprises tris(2,4-di-t-butylphenyl)phosphite.

10. The composition of claim 1 comprising, based on the total weight of the composition, 50 wt.% to 95 wt.% of a poly(aliphatic ester-carbonate)comprising:
bisphenol-A polycarbonate units; and
units of the formula 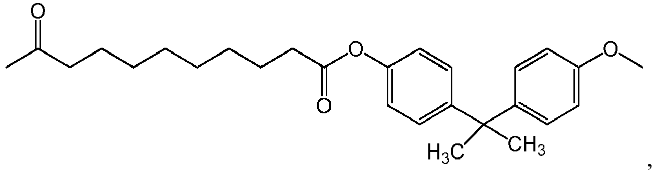
5 wt.% to 50 wt.% of an aliphatic polyester comprising units of the formula 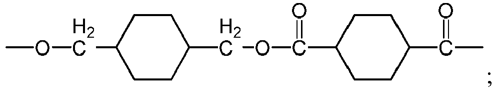
a photochromic dye; and
0.01 wt.% to 0.2 wt.% of an additive selected from an antioxidant, a heat stabilizer, a mold release agent, an ultraviolet light stabilizer, or a combination comprising at least one of the foregoing;
wherein the composition has a transmission of 80% or more and a haze of 3% or less, measured according to ASTM D1003 (2007) using the color space CIE1931 (Illuminant C and a 2° observer) at a thickness of 1.5 mm.

11. The composition of claim 10, wherein the photochromic dye is a naphth[2,1-b][1,4]oxazine, a naphth[1,2-b][1,4]oxazine, a 3H-naphtho[2,1-b]pyran, a 2H-naphtho[1,2-b]pyran, or a combination comprising at least one of the foregoing.

12. The composition of any one of claims 10 to 11, wherein the additive comprises tris(2,4-di-t-butylphenyl)phosphite.

13. The composition of claim 1 comprising, based on the total weight of the composition, 50 wt.% to 95 wt.% of a poly(aliphatic ester-carbonate) comprising:
bisphenol-A polycarbonate units; and
units of the formula 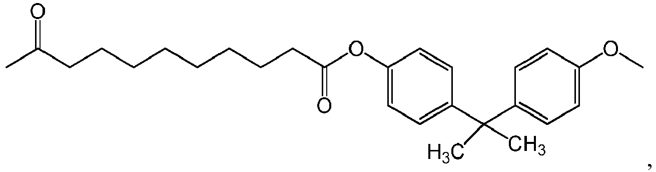
5 wt.% to 50 wt.% of an aliphatic polyester comprising units of the formula 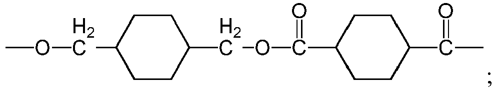
a photochromic dye selected from naphth[2,1-b][1,4]oxazine, a naphth[1,2-b][1,4]oxazine, a 3H-naphtho[2,1-b]pyran, a 2H-naphtho[1,2-b]pyran, or a combination comprising at least one of the foregoing, wherein the photochromic dye is present in an amount of 10 ppm to 1,000 ppm by weight, based on the total parts by weight of the poly(aliphatic ester-carbonate) and the aliphatic polyester;
0.01 to 0.1 wt.% of phosphoric acid; and
0.01 wt.% to 0.2 wt.% tris(2,4-di-t-butylphenyl)phosphite;
wherein the composition has a transmission of 80% or more and a haze of 3% or less, measured according to ASTM D1003 (2007) using the color space CIE1931 (Illuminant C and a 2° observer) at a thickness of 1.5 mm; and
the composition has a delta a* value of 0.1 to 10 measured on Color Eye 7000A according to ASTM 6290-98.

14. An article comprising the composition of any one of claims 1 to 13, optionally the article is in the form of a film or sheet.

15. A method of forming an article comprising shaping, extruding, preferably melt-extruding, blow molding, or injection molding the composition of any one of claims 1 to 13.

## Patentansprüche

1. Eine photochrome Polycarbonat-Zusammensetzung, folgendes umfassend:
Ein Poly(aliphatisches Estercarbonat), welches Bisphenol A Carbonateinheiten umfasst;
einen cycloaliphatischen Polyester, der Einheiten der Formel 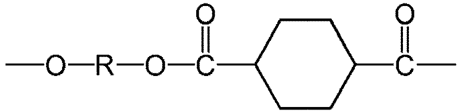
umfasst, wobei R ein C₂₋₁₂Alkylen oder ein C₃₋₁₂ Cycloalkylen ist; und
einen photochromen Farbstoff;
wobei die Zusammensetzung eine Transmission von 80% oder mehr und eine Trübung von 3% oder weniger besitzt, gemessen nach ASTM D1003 (2007), unter Benutzung des Farbraums CIE1931 (Lichtart C und ein 2° Beobachter) bei einer Dicke von 1,5 mm.

2. Die Zusammensetzung gemäß Anspruch 1, wobei die Zusammensetzung mindestens eine der folgenden Eigenschaften besitzt: ein Biegemodul von weniger als 3000 MPa, gemessen nach ASTM D790 (2010) mit der Geschwindigkeit 1,27 mm/min; oder die Zusammensetzung besitzt einen delta a* Wert von 0,1 bis 10, gemessen auf Color Eye 7000A, gemäß ASTM 6290-98.

3. Die Zusammensetzung gemäß Anspruch 1 oder Anspruch 2, wobei das Poly(aliphatische Estercarbonat) folgendes umfasst:
Bisphenol A Polycarbonateinheiten; und
Einheiten mit der Formel

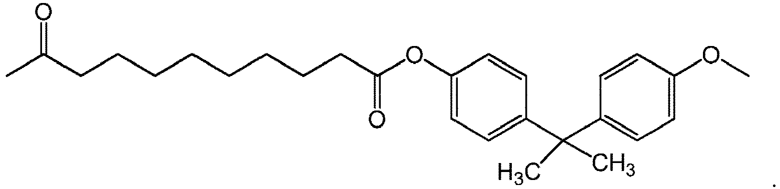

4. Die Zusammensetzung gemäß irgendeinem der Ansprüche 1 bis 3, wobei der cycloaliphatische Polyester Einheiten der Formel umfasst:

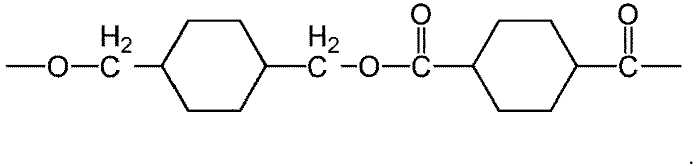

5. Die Zusammensetzung gemäß irgendeinem der Ansprüche 1 bis 4, wobei das Gewichtsverhältnis von dem Polycarbonat relativ zu dem cycloaliphatischen Polyester 10:1 bis 1:10 beträgt, optional ist das Polycarbonat in einer Menge von 5 Gewichtsprozent bis 95 Gewichtsprozent vorhanden, und der cycloaliphatische Polyester ist vorhanden in einer Menge von 5 Gewichtsprozent bis 95 Gewichtsprozent, jeweils bezogen auf das Gesamtgewicht der Zusammensetzung;
oder optional ist das Polycarbonat in einer Menge von 50 Gewichtsprozent bis 95 Gewichtsprozent vorhanden, und der cycloaliphatische Polyester ist in einer Menge von 5 Gewichtsprozent bis 50 Gewichtsprozent vorhanden, jeweils bezogen auf das Gesamtgewicht der Zusammensetzung.

6. Die Zusammensetzung gemäß irgendeinem der Ansprüche 1 bis 5, wobei der photochrome Farbstoff ein Benzopyran, Naphthopyran, Spironaphthopyran, Spironaphthoxazin, Spiro(indolino)naphthoxazin, Spiro(benzindolino)naphthoxazin, Spiro(indolino)pyridobenzoxazin, Spiro(benzindolino)pyridobenzoxazin, Spiro(benzindolino)naphthopyran, Spiro(indolino)benzoxazin, Spiro(indolino)benzopyran, Spiro(indolino)naphthopyran, Spiro(indolino)quinopyrane, (Arylazo)thioformisches Arylhydrazidat; Diarylethen; Fulgid, Fulgimid, Spirodihydroindolizin, oder eine Kombination, die mindestens eines der vorangehenden umfasst, wobei vorzugsweise der photochrome Farbstoff ein Naphth[2,1-b][1,4]oxazin, ein Naphth[1,2-b][1,4]oxazin, ein 3H-naphtho[2,1-b]pyran, ein 2H-naphtho[1,2-b]pyran ist, oder eine Kombination, die mindestens eines der vorangehenden umfasst.

7. Die Zusammensetzung gemäß irgendeinem der Ansprüche 1 bis 6, wobei der photochrome Farbstoff in einer Menge von 10 ppm bis 1 000 ppm pro Gewichtseinheit vorhanden ist, bezogen auf die gesamten Gewichtsteile des Polycarbonats und des aliphatischen Polyester.

8. Die Zusammensetzung gemäß irgendeinem der Ansprüche 1 bis 7, weiter 0,001 bis 0,5 Gewichtsprozent oder 0,01 bis 0,1 Gewichtsprozent an Phosphorsäure umfassend, bezogen auf das Gesamtgewicht der Zusammensetzung.

9. Die Zusammensetzung gemäß irgendeinem der Ansprüche 1 bis 8, weiter folgendes umfassend: einen Zusatzstoff, ausgewählt aus einem Antioxidationsmittel, einem Hitzestabilisator, einem Formtrennmittel, einem UV-Licht-Stabilisierer, oder einer Kombination, die mindestens eines der vorangehenden umfasst, wobei der Zusatzstoff optional Tris(2,4-di-t-butylphenyl)phosphit umfasst.

10. Die Zusammensetzung gemäß Anspruch 1, die, bezogen auf das Gesamtgewicht der Zusammensetzung, 50 bis 95 Gewichtsprozent eines Poly(aliphatischen Estercarbonat) umfasst, welches folgendes umfasst:
Bisphenol A Polycarbonateinheiten; und
Einheiten mit der Formel 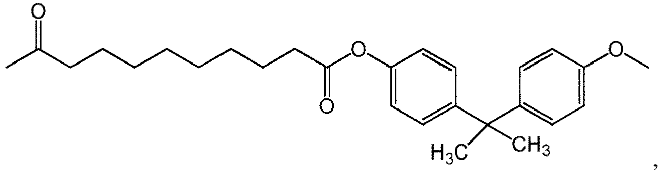
5 bis 50 Gewichtsprozent eines aliphatischen Polyesters, der Einheiten der Formel 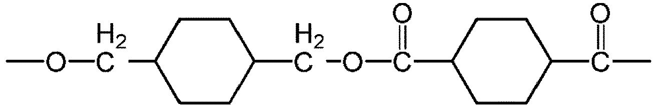 umfasst;
einen photochromen Farbstoff; und
0,01 Gewichtsprozent bis 0,2 Gewichtsprozent eines Zusatzstoffs, ausgewählt aus einem Antioxidationsmittel, einem Hitzestabilisator, einem Formtrennmittel, einem UV-Licht-Stabilisierer, oder einer Kombination, die mindestens eines der vorangehenden umfasst;
wobei die Zusammensetzung eine Transmission von 80% oder mehr und eine Trübung von 3% oder weniger besitzt, gemessen nach ASTM D1003 (2007), unter Benutzung des Farbraums CIE1931 (Lichtart C und ein 2° Beobachter) bei einer Dicke von 1,5 mm.

11. Die Zusammensetzung gemäß Anspruch 10, wobei der photochrome Farbstoff ein Naphth[2,1-b][1,4]oxazin, ein Naphth[1,2-b][1,4]oxazin, ein 3H-naphthol[2,1-b]pyran, ein 2H-naphthol[1,2-b]pyran, oder eine Kombination, die mindestens eines der vorangehenden umfasst, ist.

12. Die Zusammensetzung gemäß irgendeinem der Ansprüche 10 bis 11, wobei der Zusatzstoff Tris(2,4-di-t-butylphenyl)phosphit umfasst.

13. Die Zusammensetzung gemäß Anspruch 1, die, bezogen auf das Gesamtgewicht der Zusammensetzung, 50 bis 95 Gewichtsprozent eines Poly(aliphatischen Estercarbonat) umfasst, welches folgendes umfasst:
Bisphenol A Polycarbonateinheiten; und
Einheiten mit der Formel 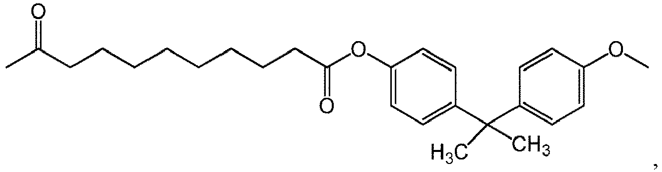
5 bis 50 Gewichtsprozent eines aliphatischen Polyesters, der Einheiten mit der Formel 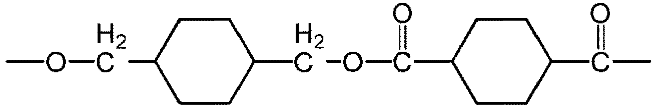 umfasst;
einen photochromen Farbstoff, gewählt aus Naphth[2,1-b][1,4]oxazin, einem Naphth[1,2-b][1,4]oxazin, einem 3H-naphtho[2,1-b]pyran, einem 2H-naphtho[1,2-b]pyran, oder eine Kombination, die mindestens eines der vorangehenden umfasst, wobei der photochrome Farbstoff in einer Menge von 10 ppm bis 1000 ppm pro Gewichtseinheit vorhanden ist, bezogen auf die gesamten Gewichtsteile des Poly(aliphatischen Estercarbonats) und des aliphatischen Polyesters;
0,01 bis 0,1 Gewichtsprozent Phosphorsäure; und
0,01 bis 0,2 Gewichtsprozent Tris(2,4-di-t-butylphenyl)phosphit;
wobei die Zusammensetzung eine Transmission von 80% oder mehr und eine Trübung von 3% oder weniger besitzt, gemessen nach ASTM D1003 (2007), unter Benutzung des Farbraums CIE1931 (Lichtart C und ein 2° Beobachter) bei einer Dicke von 1,5 mm; und
die Zusammensetzung besitzt einen delta a* Wert von 0,1 bis 10, gemessen auf Color Eye 7000A, gemäß ASTM 6290-98.

14. Ein Artikel, der die Zusammensetzung gemäß irgendeinem der Ansprüche 1 bis 13 umfasst, wobei der Artikel optional in Form eines Films oder eines Blatts vorliegt.

15. Ein Verfahren zum Formen eines Artikels, umfassend die Ausformung, Extrusion, vorzugsweise Schmelz-Extrusion, Blasformung oder Spritzgießen der Zusammensetzung gemäß irgendeinem der Ansprüche 1 bis 13.

## Revendications

1. Composition de polycarbonate photochromique comprenant :
un poly(ester-carbonate aliphatique) comprenant des motifs carbonate de bisphénol A ;
un polyester cycloaliphatique comprenant des motifs de formule 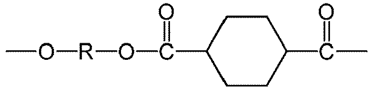 dans laquelle R est un alkylène en C₂ à C₁₂ ou un cycloalkylène en C₃ à C₁₂ ; et
un colorant photochromique ;
laquelle composition a une transmission de 80 % ou plus et un voile de 3 % ou moins, mesuré conformément à la norme ASTM D1003 (2007) utilisant l'espace colorimétrique CIE1931 (illuminant C et observateur à 2°) avec une épaisseur de 1,5 mm.

2. Composition selon la revendication 1, laquelle composition a au moins une des propriétés suivantes : un module de flexion inférieur à 3000 MPa, mesuré conformément à la norme ASTM D790 (2010) à une vitesse de 1,27 mm/min ; ou laquelle composition a une valeur delta a* de 0,1 à 10, mesurée sur Color Eye 7000A conformément à la norme ASTM 6290-98.

3. Composition selon la revendication 1 ou la revendication 2, dans laquelle le poly(ester-carbonate aliphatique) comprend :
des motifs polycarbonate de bisphénol A ; et
des motifs de formule

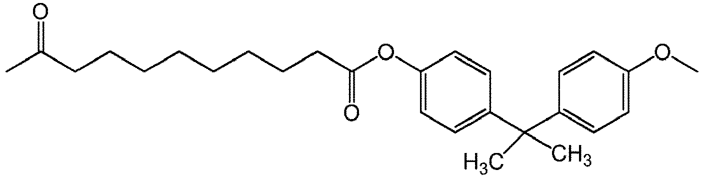

4. Composition selon l'une quelconque des revendications 1 à 3, dans laquelle le polyester cycloaliphatique comprend des motifs de formule

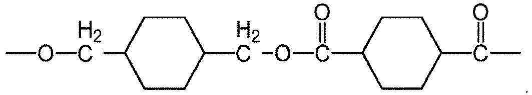

5. Composition selon l'une quelconque des revendications 1 à 4, dans laquelle le rapport en poids du polycarbonate au polyester cycloaliphatique est de 10/1 à 1/10, éventuellement le polycarbonate est présent en une quantité de 5 % en poids à 95 % en poids, et le polyester cycloaliphatique est présent en une quantité de 5 % en poids à 95 % en poids, à chaque fois par rapport au poids total de la composition ; ou éventuellement le polycarbonate est présent en une quantité de 50 % en poids à 95 % en poids, et le polyester cycloaliphatique est présent en une quantité de 5 % en poids à 50 % en poids, à chaque fois par rapport au poids total de la composition.

6. Composition selon l'une quelconque des revendications 1 à 5, dans laquelle le colorant photochromique est un benzopyrane, naphtopyrane, spironaphtopyrane, spironaphtoxazine, spiro(indolino)naphtoxazine, spiro(benzindolino)naphtoxazine, spiro(indolino)pyridobenzoxazine, spiro(benzindolino)pyridobenzoxazine, spiro(benzindolino)naphtopyrane, spiro(indolino)benzoxazine, spiro(indolino)benzopyrane, spiro(indolino)naphtopyrane, spiro(indolino)quinopyrane, arylhydrazidate (arylazo)thioformique ; diaryléthène ; fulgide, fulgimide, spirodihydroindolizine, ou une combinaison comprenant au moins l'un des précédents, de préférence le colorant photochromique est une napht[2,1-b][1,4]oxazine, une napht[1,2-b][1,4]oxazine, un 3H-naphto[2,1-b]pyrane, un 2H-naphto[1,2-b]pyrane, ou une combinaison comprenant au moins l'un des précédents.

7. Composition selon l'une quelconque des revendications 1 à 6, dans laquelle le colorant photochromique est présent en une quantité de 10 ppm à 1000 ppm en poids, par rapport aux parties totales en poids du polycarbonate et du polyester aliphatique.

8. Composition selon l'une quelconque des revendications 1 à 7, comprenant en outre 0,001 à 0,5 % en poids ou 0,01 à 0,1 % en poids d'acide phosphorique, par rapport au poids total de la composition.

9. Composition selon l'une quelconque des revendications 1 à 8, comprenant en outre un additif choisi parmi un antioxydant, un stabilisant à la chaleur, un agent de démoulage, un stabilisant à la lumière ultraviolette, ou une combinaison comprenant au moins l'un des précédents, éventuellement l'additif comprend du phosphite de tris(2,4-dit-butylphényle) .

10. Composition selon la revendication 1, comprenant, par rapport au poids total de la composition,
50 % en poids à 95 % en poids d'un poly(ester-carbonate aliphatique) comprenant :
des motifs polycarbonate de bisphénol A ; et
des motifs de formule 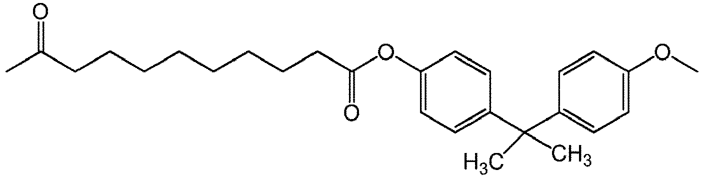
5 % en poids à 50 % en poids d'un polyester aliphatique comprenant des motifs de formule 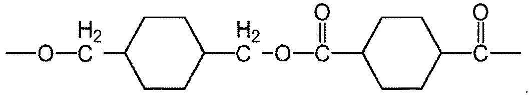
un colorant photochromique ; et
0,01 % en poids à 0,2 % en poids d'un additif choisi parmi un antioxydant, un stabilisant à la chaleur, un agent de démoulage, un stabilisant à la lumière ultraviolette, ou une combinaison comprenant au moins l'un des précédents ;
laquelle composition a une transmission de 80 % ou plus et un voile de 3 % ou moins, mesuré conformément à la norme ASTM D1003 (2007) utilisant l'espace colorimétrique CIE1931 (illuminant C et observateur à 2°) avec une épaisseur de 1,5 mm.

11. Composition selon la revendication 10, dans laquelle le colorant photochromique est une napht[2,1-b][1,4]oxazine, une napht[1,2-b][1,4]oxazine, un 3H-naphto[2,1-b]pyrane, un 2H-naphto[1,2-b]pyrane, ou une combinaison comprenant au moins l'un des précédents.

12. Composition selon l'une quelconque des revendications 10 et 11, dans laquelle l'additif comprend du phosphite de tris(2,4-di-t-butylphényle) .

13. Composition selon la revendication 1, comprenant, par rapport au poids total de la composition,
50 % en poids à 95 % en poids d'un poly(ester-carbonate aliphatique) comprenant :
des motifs polycarbonate de bisphénol A ; et
des motifs de formule 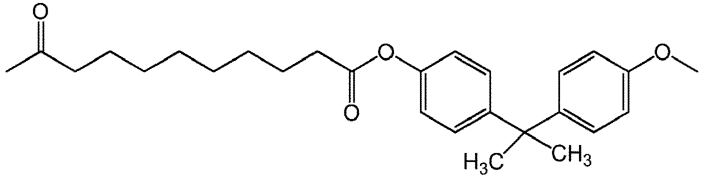
5 % en poids à 50 % en poids d'un polyester aliphatique comprenant des motifs de formule 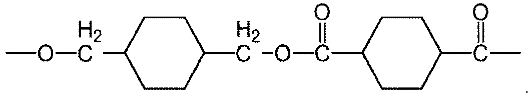
un colorant photochromique choisi parmi une napht[2,1-b] [1,4]oxazine, une napht[1,2-b] [1,4]oxazine, un 3H-naphto[2,1-b]pyrane, un 2H-naphto[1,2-b]pyrane, ou une combinaison comprenant au moins l'un des précédents, lequel colorant photochromique est présent en une quantité de 10 ppm à 1000 ppm en poids, par rapport aux parties totales en poids du poly(ester-carbonate aliphatique) et du polyester aliphatique ;
0,01 à 0,1 % en poids d'acide phosphorique ; et
0,01 % en poids à 0,2 % en poids de phosphite de tris(2,4-di-t-butylphényle) ;
laquelle composition a une transmission de 80 % ou plus et un voile de 3 % ou moins, mesuré conformément à la norme ASTM D1003 (2007) utilisant l'espace colorimétrique CIE1931 (illuminant C et observateur à 2°) avec une épaisseur de 1,5 mm ; et
laquelle composition a une valeur delta a* de 0,1 à 10, mesurée sur Color Eye 7000A conformément à la norme ASTM 6290-98.

14. Article comprenant la composition de l'une quelconque des revendications 1 à 13, lequel article est éventuellement sous la forme d'un film ou d'une feuille.

15. Procédé de formation d'un article, comprenant le façonnage, l'extrusion, de préférence l'extrusion à l'état fondu, le moulage par soufflage, ou le moulage par injection de la composition de l'une quelconque des revendications 1 à 13.
